# EUROPEAN PATENT APPLICATION

(11) **EP 4 714 818 A2**
(43) Date of publication of application: **25.03.2026**
(21) Application number: 23945239.4
(22) Date of filing: 20.12.2023
(51) Int. Cl.: B63B 35/44, B63B 35/38, B63B 43/06, F03D 13/25

(54) **FLOATING OFFSHORE POWER GENERATION DEVICE**

(30) Priority: 11.07.2023 KR 20230089786
(71) Applicant: POSCO Co., Ltd, Pohang-si, Gyeongsangbuk-do 37859 (KR)
(72) Inventor: KIM, Eungsoo, Incheon 22002 (KR); NOH, Myunghyun, Incheon 21585 (KR); PARK, Kyusik, Incheon 21986 (KR)
(74) Representative: Meissner Bolte Partnerschaft mbB
(86) International application number: PCT/KR2023/021054
(87) International publication number: WO 2025/014010

(57) **Abstract**

A floating wind power generation device may include a power generation unit configured to perform a wind power generation action, and a floating body provided to support the power generation unit, wherein the floating body includes a main column configured to support the power generation unit, a plurality of auxiliary columns provided around the main column, a plurality of connecting members configured to connect the main column and each of the plurality of auxiliary columns, and a plurality of pontoons provided below the plurality of connecting members with respect to the direction of gravity to support a self-weight of the main column and the plurality of auxiliary columns.

## Description

### [Technical Field]

The present disclosure relates to a floating offshore power generation device.

### [Background Art]

Wind power generation converts wind energy into mechanical energy to produce electricity, and has been highlighted as a clean energy source for reducing greenhouse gas emissions.

Wind power generation devices have been installed mainly on land, but they are increasingly being installed offshore to solve noise complaints and site acquisition issues due to increasing demand.

One type of offshore wind power generation devices is the floating type, which generates electricity while floating in the water. The floating wind power generation devices are less restricted by water depth, allowing them to be easily installed in deep offshore waters where power generation efficiency may be increased through strong winds. A floating offshore power generation devices includes a power generation unit located at an upper portion and a substructure provided at a lower portion to support the power generation unit while floating on the sea.

### [Disclosure]

### [Technical Problem]

An aspect of the present disclosure provides a floating wind power generation device with improved motion performance, which reduces production costs and facilitates vessel access by improving the structure of the substructure of the floating wind power generation device.

### [Technical Solution]

According to an aspect of the present disclosure, a floating wind power generation device may include a power generation unit configured to perform a wind power generation action, and a floating body provided to support the power generation unit, wherein the floating body includes a main column configured to support the power generation unit, a plurality of auxiliary columns provided around the main column, a plurality of connecting members configured to connect the main column and each of the plurality of auxiliary columns, and a plurality of pontoons provided below the plurality of connecting members with respect to the direction of gravity to support a self-weight of the main column and the plurality of auxiliary columns.

Each of the plurality of pontoons may extend from a region between the main column and the plurality of auxiliary columns to a respective one of the main column and the plurality of auxiliary columns.

The plurality of pontoons may be connected to each other in the region.

The plurality of pontoons may have the same length as each other.

The plurality of auxiliary columns may include a first auxiliary column and a second auxiliary column, which are adjacent to the main column.

The plurality of pontoons may include a first pontoon connected to the main column, a second pontoon connected to the first auxiliary column, and a third pontoon connected to the second auxiliary column.

The second pontoon and the third pontoon may have the same length as each other.

The first pontoon may have a length longer than that of each of the second pontoon and the third pontoon.

The second pontoon and the third pontoon may have the same length as each other.

The first pontoon may have a length shorter than that of each of the second pontoon and the third pontoon.

The first pontoon, the second pontoon, and the third pontoon may have the same width as each other.

The second pontoon and the third pontoon may have the same width as each other.

The first pontoon may have a width narrower than that of each of the second pontoon and the third pontoon.

The plurality of auxiliary columns may include a first auxiliary column and a second auxiliary column, which are adjacent to the main column, and a third auxiliary column provided between the first auxiliary column and the second auxiliary column.

The first to third auxiliary columns may be positioned on an imaginary circumference.

The plurality of auxiliary columns may further include N auxiliary columns arranged on the imaginary circumference.

The first pontoon may include a first pontoon receiving portion formed inside the first pontoon to receive ballast water.

The second pontoon may include a second pontoon receiving portion formed inside the second pontoon to receive ballast water.

The third pontoon may include a third pontoon receiving portion formed inside the third pontoon to receive ballast water.

The first pontoon receiving portion, the second pontoon receiving portion, and the third pontoon receiving portion may form spaces that are separated from each other.

At least two of the first pontoon receiving portion, the second pontoon receiving portion, and the third pontoon receiving portion may be provided to be connected to each other to allow ballast water to move.

The main column may include a main column receiving portion provided to receive ballast water.

The first auxiliary column may include a first auxiliary column receiving portion provided to receive ballast water.

The second auxiliary column may include a second auxiliary column receiving portion provided to receive ballast water.

The main column receiving portion and the first pontoon receiving portion may be connected to each other.

The first auxiliary column receiving portion and the second pontoon receiving portion may be connected to each other.

The second auxiliary column receiving portion and the third pontoon receiving portion may be connected to each other.

According to an aspect of the present disclosure, a floating wind power generation device may include a power generation unit configured to perform a wind power generation action, and a floating body provided to support the power generation unit, wherein the floating body includes a main column configured to support the power generation unit, a first auxiliary column and a second auxiliary column provided around the main column, a connecting member comprising a first connecting member connecting the main column and the first auxiliary column, a second connecting member connecting the main column and the second auxiliary column, and a third connecting member connecting the first auxiliary column and the second auxiliary column, and a pontoon provided below the connecting member with respect to the direction of gravity to support a self-weight of the main column, the first auxiliary column, and the second auxiliary column, the pontoon comprising a first pontoon extending from a region between the main column, the first auxiliary column, and the second auxiliary column to the main column, a second pontoon extending from the region to the first auxiliary column, and a third pontoon extending from the region to the second auxiliary column.

### [Advantageous Effects]

Various embodiments of the present disclosure can improve the motion performance of a floating wind power generation device and reduce manufacturing costs by improving the structure of the pontoon.

Various embodiments of the present disclosure can facilitate vessel access to the floating wind power generation device by improving the structure of the pontoon.

### [Description of Drawings]

FIG. 1 is a perspective view of a floating wind power generation device according to an embodiment.
FIG. 2 is a view showing a floating body separated from the floating wind power generation device according to an embodiment.
FIG. 3 is a plan view showing the floating body separated from the floating wind power generation device according to an embodiment.
FIG. 4 is a plan view of columns and pontoons in the floating wind power generation device according to an embodiment.
FIG. 5 is a plan view of columns and pontoons in a floating wind power generation device according to an embodiment.
FIG. 6 is a plan view of columns and pontoons in a floating wind power generation device according to an embodiment.

### [Modes of the Invention]

The embodiments described herein are only the most preferred embodiments of the present disclosure and do not represent all of the technical spirit of the present disclosure. Therefore, it should be understood that various equivalents or modifications that may replace them at the time of this application are also included in the scope of the rights of the present disclosure.

The use of singular forms may include plural forms unless the context clearly dictates otherwise. The shapes and sizes of components in the drawings may be exaggerated for clarity of description.

In this specification, terms such as 'comprising' or 'having' are intended to indicate the presence of stated features, numbers, steps, operations, components, parts, or combinations thereof, and should not be construed as precluding the presence or addition of one or more other features, numbers, steps, operations, components, parts, or combinations thereof.

Throughout the specification, ordinal numbers such as "first", "second", "primary", and "secondary" are used to distinguish between a plurality of components, and the ordinals used do not indicate the order of arrangement, order of manufacture, or importance of the components.

When a component is referred to as being "connected" to another component, it may be directly connected to the other component, but it should be understood that other components may be interposed.

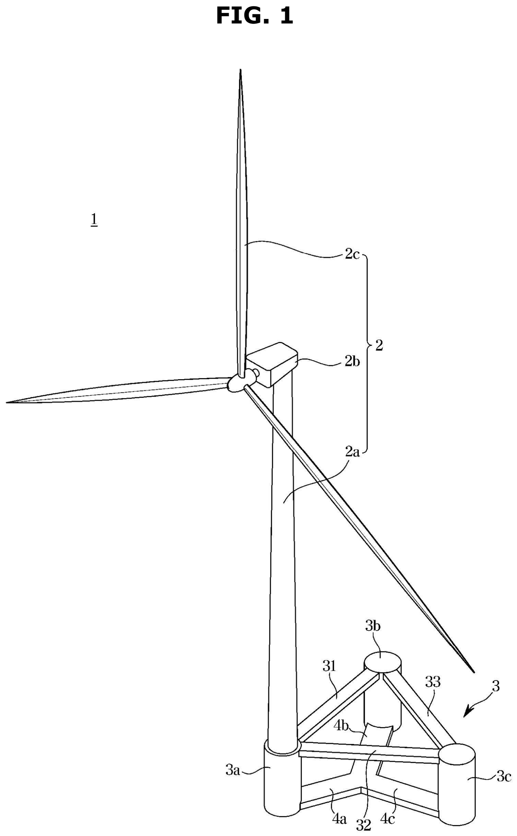

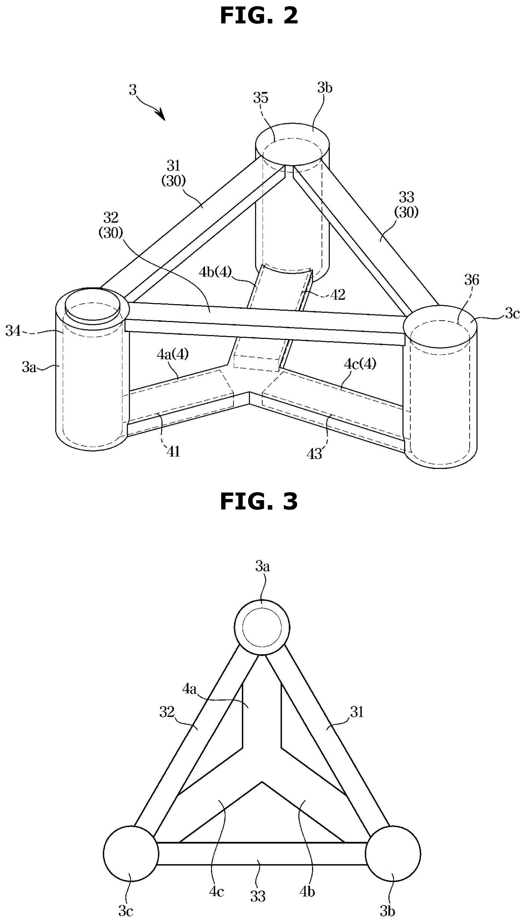

FIG. 1 is a perspective view of a floating wind power generation device according to an embodiment. FIG. 2 is a view showing a floating body separated from the floating wind power generation device according to an embodiment. FIG. 3 is a plan view showing the floating body separated from the floating wind power generation device according to an embodiment.

Referring to FIG. 1, a floating wind power generation device 1 may include a power generation unit 2 provided to perform wind power generation, and a floating body 3 provided to support the power generation unit 2.

The power generation unit 2 may include a tower 2a, a nacelle 2b mounted on an upper portion of the tower 2a, and a rotor 2c connected to a rotating shaft of the nacelle 2b. The nacelle 2b may be a configuration that mechanically rotates using wind power and include a generator. The power generation unit 2 may perform a generation action as the rotor 2c, which is rotated by the wind, is actuated to generate power.

The floating body 3 may be provided to float on water. The floating body 3 may be provided to support the power generation unit 2 while floating on the water.

The floating body may be configured in various shapes. In the case of a semi-submersible type, it may be divided into a central arrangement type floating body, in which three columns are arranged corresponding to the vertices of a triangle and the power generation unit is installed at the central portion of the columns, and an eccentric arrangement type floating body, in which three columns are similarly arranged and the power generation unit is installed on any one of the columns.

According to an embodiment, the floating body 3 may be an eccentric arrangement type floating body. The floating body may include a plurality of columns. For example, the floating body 3 may include three columns 3a, 3b, and 3c arranged at equal distances from each other, and the power generation unit 2 may be installed on any one of these three columns 3a, 3b, and 3c. For example, as shown in FIG. 1, the power generation unit 2 may be installed on a main column 3a.

Referring to FIGS. 1 to 3, the floating body 3 may include the main column 3a and a plurality of auxiliary columns arranged at substantially equal distances.

The plurality of auxiliary columns may include a first auxiliary column 3b and a second auxiliary column 3c. The main column 3a, the first auxiliary column 3b, and the second auxiliary column 3c may be arranged at positions corresponding to the vertices of a triangle. For example, the main column 3a, the first auxiliary column 3b, and the second auxiliary column 3c may be arranged at positions corresponding to the vertices of an equilateral triangle. In this case, a first distance between the main column 3a and the first auxiliary column 3b, a second distance between the first auxiliary column 3b and the second auxiliary column 3c, and a third distance between the second auxiliary column 3c and the main column 3a may be equal to each other. As described above, the power generation unit 2 may be installed on the main column 3a.

In another embodiment, the plurality of auxiliary columns may include three or more auxiliary columns. For example, the plurality of auxiliary columns may include a first auxiliary column and a second auxiliary column, which are adjacent to the main column, and a third auxiliary column provided between the first auxiliary column and the second auxiliary column. In this case, the first to third auxiliary columns may be arranged to be positioned on an imaginary circumference. In addition, the plurality of auxiliary columns may include four or more auxiliary columns arranged to be positioned on an imaginary circumference together with the main column.

Hereinafter, the case where the plurality of auxiliary columns includes the first auxiliary column 3b and the second auxiliary column 3c will be described as an example.

The floating body 3 may include a connecting member 30 that connects between the main column 3a, the first auxiliary column 3b, and the second auxiliary column 3c.

The connecting member 30 may include a first connecting member 31 connecting the main column 3a and the first auxiliary column 3b, a second connecting member 32 connecting the main column 3a and the second auxiliary column 3c, and a third connecting member 33 connecting the first auxiliary column 3b and the second auxiliary column 3c. The first connecting member 31, the second connecting member 32, and the third connecting member 33 may be arranged to correspond to each side of a triangle. For example, the first connecting member 31, the second connecting member 32, and the third connecting member 33 may be arranged to correspond to each side of an equilateral triangle.

In another embodiment, the first connecting member 31 and the second connecting member 32 may have the same length, but the third connecting member 33 may have a length that is longer or shorter than the first connecting member 31 and the second connecting member 32, thereby being arranged corresponding to each side of an isosceles triangle.

In another embodiment, the first connecting member 31 and the second connecting member 32 may be provided in a linear form, but the third connecting member 33 may be provided in a form that is convexly curved outwardly from a region.

As described above, in an embodiment where the number of auxiliary columns is three or more, the number of connecting members 30 may be increased correspondingly.

In an embodiment where the number of auxiliary columns is three or more, a plurality of connecting members 30 connecting an auxiliary column to other adjacent auxiliary columns may be curved to form an approximate circular arc shape with respect to each other. In such an embodiment, the plurality of connecting members 30 may provide more distributed support for external forces, thereby improving the supporting capacity of the auxiliary columns.

The connecting member 30 may be provided in a variety of shapes. For example, the connecting member 30 may be provided in the form of a pipe with a rectangular cross-section, as shown in FIG. 1, or alternatively, the connecting member 30 may be provided in the form of a pipe with a circular, oval, or polygonal cross-section. In addition, the connecting member 30 may be provided in a hollow form to improve buoyancy, or it may be formed as a single piece with a solid internal structure to provide stronger support for external forces. This may be appropriately selected, considering external factors, such as wind speed and tidal force in the sea in which it is installed, and seawater temperature.

The connecting member 30 may prevent the main column 3a, the first auxiliary column 3b, and the second auxiliary column 3c from moving away from or closer to each other, and may ensure that the floating body 3 is structurally stable. The connecting member 30 may prevent the floating body 3 from being damaged by vibrations or impacts applied to the floating body 3 at sea.

According to an embodiment, the floating body 3 may include a pontoon 4 disposed below the connecting member 30 with respect to the direction of gravity.

In an embodiment, the pontoon 4 may include a first pontoon 4a connected to the main column 3a, a second pontoon 4b connected to the first auxiliary column 3b, and a third pontoon 4c connected to the second auxiliary column 3c. The pontoon 4 may extend from a region between the main column 3a, the first auxiliary column 3b, and the second auxiliary column 3c to the main column 3a, the first auxiliary column 3b, and the second auxiliary column 3c. For example, the pontoon 4 may extend from a central portion between the main column 3a, the first auxiliary column 3b, and the second auxiliary column 3c to the main column 3a, the first auxiliary column 3b, and the second auxiliary column 3c.

One end of the first pontoon 4a may be connected to the main column 3a, and the other end of the first pontoon 4a may be connected to the second pontoon 4b and the third pontoon 4c. One end of the second pontoon 4b may be connected to the first auxiliary column 3b, and the other end of the second pontoon 4b may be connected to the first pontoon 4a and the third pontoon 4c. One end of the third pontoon 4c may be connected to the second auxiliary column 3c, and the other end of the third pontoon 4c may be connected to the first pontoon 4a and the second pontoon 4b. In other words, the first pontoon 4a, the second pontoon 4b, and the third pontoon 4c may be provided to be connected to each other.

According to the present disclosure, the pontoon 4 may be provided in an approximate Y-shape. Based on the pontoon 4 being provided in a Y-shape, the sum of the lengths of the first pontoon 4a, the second pontoon 4b, and the third pontoon 4c may be smaller than the sum of the lengths of the first connecting member 31, the second connecting member 32, and the third connecting member 33. According to the present disclosure, the length of the pontoon 4 may be reduced by providing the structure of the pontoon 4 with an approximate Y-shape. This may reduce the manufacturing cost of the floating wind power generation device.

Furthermore, the pontoon 4 may be provided in a Y-shape, which may improve the ease of vessel access to the floating wind power generation device 1. When the pontoon 4 is provided in a Y-shape, a vessel may approach up to the point where the pontoons 4 meet. Thus, the ease of vessel access may be improved compared to a structure in which the pontoons 4 are arranged in the same way as the connecting member 30.

Referring to FIG. 2, the floating body 3 according to an embodiment may include a ballast space provided to be filled with ballast water. The floating body 3 may include a column receiving portion and a pontoon receiving portion as the ballast spaces provided to receive ballast water.

Specifically, the floating body 3 may include a main column receiving portion 34 formed inside the main column 3a, a first auxiliary column receiving portion 35 formed inside the first auxiliary column 3b, and a second auxiliary column receiving portion 36 formed inside the second auxiliary column 3c. In addition, the floating body 3 may include a first pontoon receiving portion 41 formed inside the first pontoon 4a, a second pontoon receiving portion 42 formed inside the second pontoon 4b, and a third pontoon receiving portion 43 formed inside the third pontoon 4c.

According to an embodiment, as shown in FIG. 2, the first pontoon receiving portion 41, the second pontoon receiving portion 42, and the third pontoon receiving portion 43 may form spaces that are separated from each other. In other words, the first pontoon receiving portion 41, the second pontoon receiving portion 42, and the third pontoon receiving portion 43 may not be connected to each other.

According to an embodiment, the first pontoon receiving portion 41 may be connected to the main column receiving portion 34. The second pontoon receiving portion 42 may be connected to the first auxiliary column receiving portion 35. The third pontoon receiving portion 43 may be connected to the second auxiliary column receiving portion 36.

Alternatively, at least two of the first pontoon receiving portion 41, the second pontoon receiving portion 42, and the third pontoon receiving portion 43 may be provided to be connected. For example, the first pontoon receiving portion 41, the second pontoon receiving portion 42, and the third pontoon receiving portion 43 may be connected to each other. Alternatively, the second pontoon receiving portion 42 and the third pontoon receiving portion 43 may be connected to each other, and the first pontoon receiving portion 41 may not be connected to the second pontoon receiving portion 42 and the third pontoon receiving portion 43.

In addition, the first pontoon receiving portion 41 and the main column receiving portion 34 may not be connected to each other. Similarly, the second pontoon receiving portion 42 and the first auxiliary column receiving portion 35 may not be connected to each other. The third pontoon receiving portion 43 and the second auxiliary column receiving portion 36 may not be connected to each other.

Unlike what is shown in FIG. 2, the main column 31 may not include a ballast space because the main column 3a is provided to support the power generation unit 2. In other words, the main column 3a may not include the main column receiving portion 34.

FIG. 3 is a plan view showing the floating body separated from the floating wind power generation device according to an embodiment.

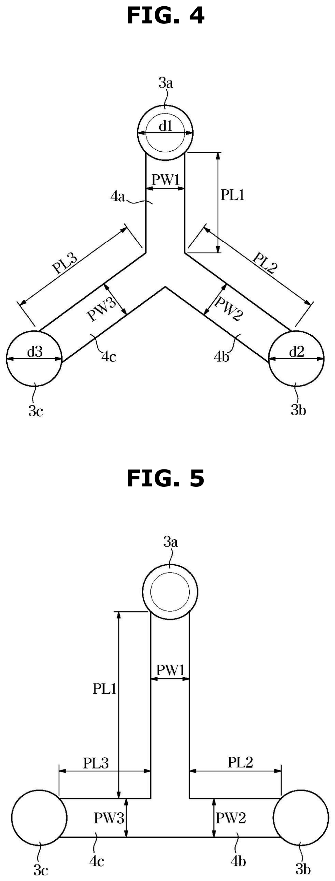

FIG. 4 is a plan view of columns and pontoons in the floating wind power generation device according to an embodiment.

Referring to FIG. 4, in the floating wind power generation device according to an embodiment, the first pontoon a, the second pontoon b, and the third pontoon c may have the same length as each other.

Referring to FIG. 4, a diameter of the main column 3a is referred to as a first diameter d1, a diameter of the first auxiliary column 3b is referred to as a second diameter d2, and a diameter of the second auxiliary column 3c is referred to as a third diameter d3.

According to an embodiment, the first diameter d1, the second diameter d2, and the third diameter d3 may be the same. However, the present disclosure is not limited thereto. The first diameter d1, the second diameter d2, and the third diameter d3 may be different from each other. In addition, two of the first diameter d1, the second diameter d2, and the third diameter d3 may be the same, and the remaining one may be different. For example, the first diameter d1 may be larger than the second diameter d2 and the third diameter d3, and the second diameter d2 and the third diameter d3 may be the same. The first diameter d1 of the main column 3a may be provided larger than the second diameter d2 and the third diameter d3 in order to support the power generation unit 2.

Referring to FIG. 4, a length of the first pontoon 41 is referred to as a first length PL1, a length of the second pontoon 42 I is referred to as a second length PL2, and a length of the third pontoon 43 is referred to as a third length PL3. In addition, a width of the first pontoon 41 is referred to as a first width PW1, a width of the second pontoon 42 is referred to as a second width PW2, and a width of the third pontoon 43 is referred to as a third width PW3.

According to an embodiment, the first length PL1, the second length PL2, and the third length PL3 may be provided to be the same. In addition, the first width PW1, the second width PW2, and the third width PW3 may be provided to be the same.

In contrast to what is shown in FIG. 4, the first length PL1, the second length PL2, and the third length PL3 may be provided to be different from each other. The first width PW1, the second width PW2, and the third width PW3 may be provided to be different from each other.

The main column 3a may support the power generation unit 2, and thus may have a larger load than the first auxiliary column 3b and the second auxiliary column 3c. To balance the floating wind power generation device 1 as a whole, ballast water may be filled in the first auxiliary column 3b and the second auxiliary column 3c. At this time, when ballast water is filled only in the first auxiliary column 3b and the second auxiliary column 3c, the center of gravity (COG) of the floating wind power generation device 1 may be relatively high, which may result in a decrease in the balance restoring ability at sea.

According to the present disclosure, ballast water may be filled not only in the first auxiliary column 3b and the second auxiliary column 3c, but also in the first pontoon receiving portion 41, the second pontoon receiving portion 42, and the third pontoon receiving portion 43. In particular, by filling ballast water in the second pontoon receiving portion 42 and the third pontoon receiving portion 43, the COG of the floating wind power generation device 1 may be lowered. This may improve the balance restoring ability of the floating wind power generation device 1 at sea. In other words, the dynamic motion performance of the floating wind power generation device 1 can be improved.

According to the present disclosure, the lengths PL1, PL2, and PL3 of the first pontoon 4a, the second pontoon 4b, and the third pontoon 4c may be changed to improve the dynamic motion performance of the floating wind power generation device 1. In addition, the widths PW1, PW2, and PW3 of the first pontoon 4a, the second pontoon 4b, and the third pontoon 4c may be changed to improve the dynamic motion performance of the floating wind power generation device 1.

FIG. 5 is a plan view of columns and pontoons in a floating wind power generation device according to an embodiment.

Referring to FIG. 5, in a floating wind power generation device according to an embodiment, the first length PL1 of the first pontoon a may be provided to be larger than the second length PL2 of the second pontoon b and the third length PL3 of the third pontoon c. In addition, the second length PL2 of the second pontoon b and the third length PL3 of the third pontoon c may be provided to be the same.

In FIG. 5, an example in which the first width PW1, the second width PW2, and the third width PW3 are provided to be the same is shown, but as described above, the first width PW1, the second width PW2, and the third width PW3 may be provided to be different from each other, or only one of the first width PW1, the second width PW2, and the third width PW3 may be provided to be different. For example, the second width PW2 and the third width PW3 may be provided to be the same, and the first width PW1 may be provided to be larger or smaller than the second width PW2 and the third width PW3.

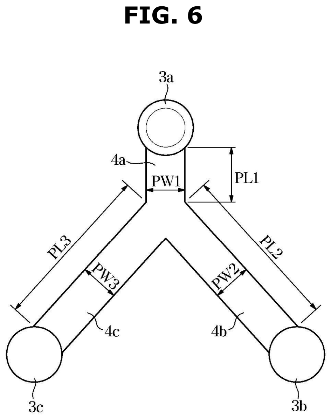

FIG. 6 is a plan view of columns and pontoons in a floating wind power generation device according to an embodiment.

Referring to FIG. 6, in a floating wind power generation device according to an embodiment, the first length PL1 of the first pontoon a may be provided to be shorter than the second length PL2 of the second pontoon b and the third length PL3 of the third pontoon c. The second length PL2 of the second pontoon b and the third length PL3 of the third pontoon c may be provided to be the same.

In FIG. 6, an example in which the first width PW1, the second width PW2, and the third width PW3 are provided to be the same is shown, but as described above, the first width PW1, the second width PW2, and the third width PW3 may be provided to be different from each other, or only one of the first width PW1, the second width PW2, and the third width PW3 may be provided to be different. For example, the second width PW2 and the third width PW3 may be provided to be the same, and the first width PW1 may be provided to be larger or smaller than the second width PW2 and the third width PW3.

As described above, according to the present disclosure, the lengths PL1, PL2, and PL3 and the widths PW1, PW2, and PW3 of the first pontoon 4a, the second pontoon 4b, and the third pontoon 4c may be individually adjusted. By individually adjusting the length and width of the first pontoon 4a, the second pontoon 4b, and the third pontoon 4c, it is possible to optimize the kinematic performance of the floating body 2.

Furthermore, although not specifically shown in the drawings, the heights of the first pontoon 4a, the second pontoon 4b, and the third pontoon 4c may be individually adjusted. By individually adjusting the heights of the first pontoon 4a, the second pontoon 4b, and the third pontoon 4c, it is possible to optimize the kinematic performance of the floating body 2.

As described above, by forming the first pontoon 4a, the second pontoon 4b, and the third pontoon 4c to extend from a region provided on the inner side of the main column 3a, the first auxiliary column 3b, and the second auxiliary column 3c to each column, interference between a lower portion of a vessel approaching the floating wind power generation device 1 and the floating body 2 may be minimized. In other words, the pontoon 4 may be provided in an approximate Y-shape to minimize interference between the lower portion of the vessel approaching the floating wind power generation device 1 and the floating body 2.

While specific embodiments has been illustrated and described above. However, the present disclosure is not limited to the above-described embodiments, and those skilled in the art to which the invention pertains can make various changes and modifications without departing from the gist of the technical spirit of the invention described in the claims below.

## Claims

1. A floating wind power generation device, comprising:
a power generation unit configured to perform a wind power generation action; and
a floating body provided to support the power generation unit;
wherein the floating body comprises:
a main column configured to support the power generation unit;
a plurality of auxiliary columns provided around the main column;
a plurality of connecting members configured to connect the main column and each of the plurality of auxiliary columns; and
a plurality of pontoons provided below the plurality of connecting members with respect to the direction of gravity to support a self-weight of the main column and the plurality of auxiliary columns.

2. The floating wind power generation device of claim 1, wherein each of the plurality of pontoons extends from a region between the main column and the plurality of auxiliary columns to a respective one of the main column and the plurality of auxiliary columns.

3. The floating wind power generation device of claim 2, wherein the plurality of pontoons are connected to each other in the region.

4. The floating wind power generation device of claim 1, wherein the plurality of pontoons have the same length as each other.

5. The floating wind power generation device of claim 1, wherein
the plurality of auxiliary columns comprise a first auxiliary column and a second auxiliary column, which are adjacent to the main column, and
the plurality of pontoons comprise a first pontoon connected to the main column, a second pontoon connected to the first auxiliary column, and a third pontoon connected to the second auxiliary column.

6. The floating wind power generation device of claim 5, wherein
the second pontoon and the third pontoon have the same length as each other, and
the first pontoon has a length longer than the second pontoon and the third pontoon.

7. The floating wind power generation device of claim 5, wherein
the second pontoon and the third pontoon have the same length as each other, and
the first pontoon has a length shorter than the second pontoon and the third pontoon.

8. The floating wind power generation device of claim 5, wherein the first pontoon, the second pontoon, and the third pontoon have the same width as each other.

9. The floating wind power generation device of claim 5, wherein
the second pontoon and the third pontoon have the same width as each other, and
the first pontoon has a width narrower than the second pontoon and the third pontoon.

10. The floating wind power generation device of claim 1, wherein
the plurality of auxiliary columns comprise a first auxiliary column and a second auxiliary column, which are adjacent to the main column, and a third auxiliary column provided between the first auxiliary column and the second auxiliary column, and
the first to third auxiliary columns are positioned on an imaginary circumference.

11. The floating wind power generation device of claim 10, wherein the plurality of auxiliary columns further comprise N auxiliary columns arranged on the imaginary circumference.

12. The floating wind power generation device of claim 5, wherein
the first pontoon comprises a first pontoon receiving portion formed inside the first pontoon to receive ballast water,
the second pontoon comprises a second pontoon receiving portion formed inside the second pontoon to receive ballast water, and
the third pontoon comprises a third pontoon receiving portion formed inside the third pontoon to receive ballast water.

13. The floating wind power generation device of claim 12, wherein the first pontoon receiving portion, the second pontoon receiving portion, and the third pontoon receiving portion form spaces that are separated from each other.

14. The floating wind power generation device of claim 12, wherein at least two of the first pontoon receiving portion, the second pontoon receiving portion, and the third pontoon receiving portion are provided to be connected to each other to allow ballast water to move.

15. The floating wind power generation device of claim 12, wherein
the main column comprises a main column receiving portion provided to receive ballast water,
the first auxiliary column comprises a first auxiliary column receiving portion provided to receive ballast water, and
the second auxiliary column comprises a second auxiliary column receiving portion provided to receive ballast water.

16. The floating wind power generation device of claim 15, wherein
the main column receiving portion and the first pontoon receiving portion are connected to each other,
the first auxiliary column receiving portion and the second pontoon receiving portion are connected to each other, and
the second auxiliary column receiving portion and the third pontoon receiving portion are connected to each other.

17. A floating wind power generation device, comprising:
a power generation unit configured to perform a wind power generation action; and
a floating body provided to support the power generation unit;
wherein the floating body comprises:
a main column configured to support the power generation unit;
a first auxiliary column and a second auxiliary column provided around the main column;
a connecting member comprising a first connecting member connecting the main column and the first auxiliary column, a second connecting member connecting the main column and the second auxiliary column, and a third connecting member connecting the first auxiliary column and the second auxiliary column; and
a pontoon provided below the connecting member with respect to the direction of gravity to support a self-weight of the main column, the first auxiliary column, and the second auxiliary column, the pontoon comprising a first pontoon extending from a region between the main column, the first auxiliary column, and the second auxiliary column to the main column, a second pontoon extending from the region to the first auxiliary column, and a third pontoon extending from the region to the second auxiliary column.
